# FASCICULE DE BREVET EUROPEEN

(11) **EP 3 146 850 B1**
(45) Date de publication et mention de la délivrance du brevet: **09.05.2018**
(21) Numéro de dépôt: 16189781.4
(22) Date de dépôt: 20.09.2016
(51) Int. Cl.: A23B 4/02, A23B 4/023, A23L 13/70

(54) **PROCÉDÉ DE MATURATION DE LA VIANDE**
REIFEPROZESS FÜR FLEISCH
PROCESS FOR THE MATURATION OF MEAT

(30) Priorité: 22.09.2015 FR 1558934
(43) Date de publication de la demande: 29.03.2017
(73) Titulaire: Société Vitréenne d'Abattage Jean Rozé, 35500 Vitré (FR)
(72) Inventeur: Fert, Régis, 35150 Esse (FR)
(74) Mandataire: Regimbeau

(56) Documents cités:
- WO-A2-2014/020563
- DE-U1-202012 006 924
- FR-A1- 2 696 079
- US-A- 2 988 452
- US-A1- 2007 275 134
- US-B2- 7 998 517

## Description

### DOMAINE TECHNIQUE GENERAL

L'invention se situe dans le domaine de l'alimentation.

La présente invention concerne plus précisément un procédé de maturation de la viande.

### ETAT DE L'ART

Après l'abattage de l'animal, le muscle est le siège de nombreuses transformations qui vont déterminer les qualités finales de la viande, et notamment sa tendreté.

Ces transformations se décomposent en trois phases:
- une phase de pantelance au cours de laquelle l'animal est mort mais le muscle reste souple,
- une phase de rigidité cadavérique, appelée "*rigor mortis*", au cours de laquelle les muscles deviennent durs, la température de la carcasse baisse et le pH chute, et
- une phase de maturation qui est une phase de repos de la viande au cours de laquelle la tendreté de la viande évolue positivement. La maturation est le résultat de l'action des protéases musculaires qui dégradent les protéines myofibrillaires, ce qui a pour effet de détendre progressivement le muscle.

Traditionnellement, pour affiner la viande, les artisans bouchers stockent les carcasses ou les muscles nus (non emballés) dans des chambres froides, plusieurs jours à une température d'environ 4°C. Ceci permet d'améliorer la tendreté de la viande. Cette caractéristique est en effet un critère important pour tous les consommateurs.

En fonction de l'animal, au bout d'une à deux semaines, la maturation fait apparaitre les qualités organoleptiques recherchées par le consommateur, notamment la tendreté et la saveur.

Toutefois, ce type de procédé n'est pas reproductible de façon fiable et constante, de sorte que les viandes obtenues à l'issue de ce type de procédé ne sont pas homogène.

Par ailleurs, lorsque le boucher ouvre la chambre froide, la viande en cours de maturation dégage une odeur forte qui peut incommoder les clients ou le boucher.

On connait également d'après le document US 7 998 517, un procédé de maturation de la viande, qui consiste à disposer des morceaux de viande nue, (non emballée), sur des racks placés dans une enceinte frigorifique, sous atmosphère contrôlée. Des briques de sel sont disposées sur un autre rack, le long de l'une de parois de l'enceinte et sont espacées de la viande. Périodiquement, tout au long du procédé de maturation, les morceaux de viande sont rapprochés de plus en plus du rack supportant les briques de sel. On constate que ce procédé permet d'attendrir la viande après une durée de maturation de 7 à 70 jours. Par ailleurs, une chambre de maturation de la viande en atmosphère salée est décrite dans DE 20 2012 006 924 U1. Enfin, une autre technique connue de l'état de la technique consiste à accrocher les carcasses de viande soit par le tendon d'Achille, soit par le pelvis. Ceci permet également d'améliorer la tendreté de certains muscles de l'animal. Un tel procédé est toutefois difficilement reproductible.

### PRESENTATION DE L'INVENTION

L'invention a pour objectif de fournir un procédé de maturation de la viande qui permette d'améliorer la tendreté et les qualités gustatives de la viande, par rapport aux procédés connus de l'état de la technique, et ce, de façon industrialisable, c'est-à-dire fiable et reproductible.

Un autre objectif de l'invention est de proposer un procédé qui permette d'optimiser le rendement, c'est-à-dire d'améliorer la tendreté de la viande sans perte importante de poids.

Un objectif supplémentaire de l'invention est que ce procédé permette également d'obtenir une viande offrant un aspect visuel acceptable pour le consommateur.

Enfin, un autre objectif est de retarder la date limite de consommation de la viande, en d'autres termes d'augmenter sa durée de vie.

A cet effet, l'invention concerne un procédé de maturation d'un morceau de viande.

Conformément à l'invention, ce procédé comprend les étapes consistant à :
- placer ledit morceau de viande à l'état nu, dans une première enceinte frigorifique à l'intérieur de laquelle circule de l'air chargé en sel, pendant une première durée t1,
- à l'issue de ladite première durée t1, sortir ledit morceau de viande de la première enceinte et l'emballer dans un emballage sous vide,
- puis le placer dans une deuxième enceinte frigorifique, pendant une deuxième durée t2.

Grâce à ces caractéristiques de l'invention, et notamment à la mise en oeuvre des deux étapes de maintien dans des enceintes frigorifiques avec puis sans sel, la tendreté de la viande est améliorée.

Selon d'autres caractéristiques avantageuses et non limitatives de l'invention, prises seules ou en combinaison :
- la première étape consiste à placer ledit morceau de viande à l'état nu, dans une première enceinte frigorifique à l'intérieur de laquelle sont disposés des blocs de sel et à l'intérieur de laquelle circule de l'air, pendant une première durée t1,
- la première étape consiste à placer des blocs de sel dans une enceinte annexe distincte de ladite première enceinte frigorifique et à y faire circuler de l'air, puis à envoyer l'air ainsi chargé en sel dans ladite première enceinte frigorifique contenant ledit morceau de viande à l'état nu,
- les blocs de sel sont chauffés, de préférence à une température de 8 à 12 degrés de plus que la température à laquelle le morceau de viande est maintenu dans ladite première enceinte frigorifique,
- les blocs de sel sont chauffés par des résistances électriques et/ou des lampes halogènes,
- le sel est du sel gemme, de préférence du sel de l'Himalaya,
- la quantité de blocs de sel est de 8 à 12 kilogrammes par mètre cube d'enceinte frigorifique,
- la température de la première enceinte frigorifique et/ou de la deuxième enceinte frigorifique est comprise entre 0°C et 4°C,
- la première durée (t1) est d'au moins 5 jours, de préférence comprise entre 5 et 50 jours, de préférence encore comprise entre 5 et 20 jours,
- la deuxième durée (t2) est d'au moins 20 jours, de préférence comprise entre 20 jours et 20 semaines.

### DESCRIPTION DETAILLEE

Le procédé de maturation de la viande conforme à l'invention va maintenant être décrit.

Il peut s'appliquer à tout type de viande, mais de préférence à de la viande de boeuf, de génisse, de vache, d'agneau et de porc.

Le procédé comprend principalement trois étapes.

La première étape consiste à placer au moins un morceau de viande à l'état nu dans une première enceinte frigorifique, à l'intérieur de laquelle circule de l'air chargé en sel, et ce pendant une première durée t1.

Cette première étape est réalisée de préférence 3 jours après l'abattage de l'animal.

De préférence, cette première enceinte frigorifique est maintenue à une température comprise entre 0°C et 4°C.

Le terme "à l'état nu" signifie que le morceau de viande, qui peut être sous forme d'une carcasse, de muscles ou de pièces de viande, n'est pas emballé. La viande est ainsi en contact direct avec l'atmosphère de l'enceinte frigorifique qui l'entoure.

Une solution pour obtenir l'air chargé en sel consiste à placer des blocs de sel à l'intérieur de ladite première enceinte frigorifique et à assurer une circulation d'air dans celle-ci. Ainsi, l'air chargé en sel circule autour de la viande.

Les blocs de sel sont par exemple empilés les uns sur les autres le long d'au moins l'une des cloisons de l'enceinte frigorifique.

Une autre solution pour obtenir l'air chargé en sel consiste à placer des blocs de sel dans une enceinte annexe, à faire circuler de l'air au contact des blocs de sel, puis à faire circuler ensuite l'air ainsi chargé en sel à l'intérieur de ladite première enceinte frigorifique ou de plusieurs de ces enceintes frigorifiques contenant les morceaux de viande nus.

De préférence, on utilise 8 kg à 12 kg de sel par mètre cube d'enceinte annexe ou d'enceinte frigorifique, de préférence encore 10 kg.

La viande peut être suspendue à l'intérieur de l'enceinte ou disposée sur des étagères par exemple.

Le sel utilisé est de préférence du sel gemme, c'est-à-dire un sel de type "halite", riche en minéraux et oligo-éléments (tels que du sodium, du potassium, du magnésium, du calcium, du phosphore, du manganèse, du fer, du cuivre ...). De préférence encore, on utilise des blocs de sel gemme de l'Himalaya ou du Pakistan.

Le sel a notamment pour effet de sécher la viande, de limiter les développements bactériens et de l'attendrir.

De préférence, les blocs de sel sont chauffés.

Ce chauffage a pour effet de limiter la fusion du sel, par déshydratation de l'air qui l'entoure. Le sel n'absorbant plus d'eau, il ne fond pas.

Ce chauffage peut être réalisé par exemple à l'aide de résistances électriques et/ou de lampes halogènes. Ces résistances ou lampes peuvent être disposées en regard de l'empilement des blocs de sels et à faible distance de ceux-ci.

Lorsque les blocs de sels sont disposés directement à l'intérieur de l'enceinte frigorifique, on les chauffera de préférence jusqu'à les amener à une température supérieure d'environ huit à douze degrés de plus que celle régnant à l'intérieur de l'enceinte frigorifique, (de préférence encore environ dix degrés de plus). Les résistances ou les lampes peuvent alors être disposées par exemple le long de l'un des murs de l'enceinte frigorifique.

Les blocs sont ainsi chauffés et restent secs, tandis que la viande est maintenue à une température comprise entre 0°C et 4°C.

Lorsque les blocs de sel sont disposés dans une enceinte distincte de l'enceinte frigorifique ils peuvent éventuellement être chauffés davantage.

La première durée de maturation t1 est d'au moins 5 jours, de préférence comprise entre 5 jours et 50 jours, de préférence encore comprise entre 5 jours et 20 jours.

Des essais effectués ont montrés qu'en dessous de 50 jours, on n'observait pas de diminution significative du poids de la viande.

Des essais effectués ont montrés que cette première étape de maturation permettait d'attendrir la viande et de modifier les qualités organoleptiques de la viande. Toutefois, des essais complémentaires effectués par la déposante, ont montrés que, de façon surprenante, la mise en oeuvre de la deuxième étape qui va maintenant être décrite, permettait d'améliorer encore grandement la tendreté de la viande, les valeurs organoleptiques et les rendements de séchage.

La deuxième étape du procédé consiste, à l'issue de la première durée t1, à sortir la viande de la première enceinte frigorifique, et à l'emballer sous vide, dans un film en matière plastique.

Enfin, la troisième étape du procédé consiste à disposer les morceaux de viande emballés sous vide, dans une deuxième enceinte frigorifique, pendant une deuxième durée t2.

De préférence, la troisième étape est réalisée sitôt l'achèvement de la deuxième afin de respecter la chaîne du froid.

De préférence, la deuxième enceinte frigorifique est distincte de la première et ne contient pas de blocs de sels, même si la présence ou l'absence de ceux-ci est sans incidence sur la viande puisque celle-ci est emballée sous vide.

Cette deuxième enceinte frigorifique est maintenue à une température comprise entre 0°C et 4°C. De préférence, elle est ventilée de façon à homogénéiser la température intérieure.

Quel que soit le type de viande traitée par le procédé, la deuxième durée de maturation t2 est d'au moins 20 jours. De préférence également cette durée t2 est inférieure à 20 semaines.

Des essais effectués ont toutefois montré que la tendreté était encore améliorée si cette deuxième durée de maturation t2 était d'au moins 20 jours pour le porc, d'au moins 28 jours pour de l'agneau et d'au moins 40 jours pour de la viande de boeuf, génisse ou vache.

On notera en outre que les première et deuxième étapes peuvent être effectuées par exemple par un industriel, à la sortie de l'abattoir et la troisième être effectuée par le boucher ou le distributeur.

Des essais gustatifs ont été réalisés auprès d'un panel de testeurs. Une même bête a été partagée en deux parties, l'une des parties a été conservée dans une enceinte frigorifique sans sel et l'autre partie a été soumise au procédé conforme à l'invention. Les testeurs qui ont dégusté la viande ont constaté que celle ayant été soumise au procédé conforme à l'invention était plus tendre.

Des essais ont également montrés que la viande traitée conformément au procédé de l'invention présentait peu de perte de poids et que le développement microbien était ralenti, ce qui permet d'augmenter la durée limite de sa consommation.

Enfin, un tel procédé est industrialisable et reproductible sur des bêtes différentes d'une même race d'animal, à condition d'appliquer les mêmes durées t1 et t2.

## Revendications

1. Procédé de maturation d'un morceau de viande, **caractérisé en ce qu'**il comprend les étapes suivantes consistant à :
- placer ledit morceau de viande à l'état nu, dans une première enceinte frigorifique à l'intérieur de laquelle circule de l'air chargé en sel, pendant une première durée t1,
- à l'issue de ladite première durée t1, sortir ledit morceau de viande de la première enceinte et l'emballer dans un emballage sous vide,
- puis le placer dans une deuxième enceinte frigorifique, pendant une deuxième durée t2.

2. Procédé selon la revendication 1, **caractérisé en ce que** la première étape consiste à placer ledit morceau de viande à l'état nu, dans une première enceinte frigorifique à l'intérieur de laquelle sont disposés des blocs de sel et à l'intérieur de laquelle circule de l'air, pendant une première durée t1.

3. Procédé selon la revendication 1, **caractérisé en ce que** la première étape consiste à placer des blocs de sel dans une enceinte annexe distincte de ladite première enceinte frigorifique et à y faire circuler de l'air, puis à envoyer l'air ainsi chargé en sel dans ladite première enceinte frigorifique contenant ledit morceau de viande à l'état nu.

4. Procédé selon la revendication 2 ou 3, **caractérisé en ce que** les blocs de sel sont chauffés

5. Procédé selon les revendications 2 et 4, **caractérisé en ce que** les blocs de sel sont chauffés à une température de 8 à 12 degrés de plus que la température à laquelle le morceau de viande est maintenu dans ladite première enceinte frigorifique.

6. Procédé selon la revendication 4 ou 5, **caractérisé en ce que** les blocs de sel sont chauffés par des résistances électriques et/ou des lampes halogènes.

7. Procédé selon l'une des revendications précédentes, **caractérisé en ce que** le sel est du sel gemme, de préférence du sel de l'Himalaya.

8. Procédé selon l'une des revendications précédentes, **caractérisé en ce que** la quantité de blocs de sel est de 8 à 12 kilogrammes par mètre cube d'enceinte.

9. Procédé selon l'une des revendications précédentes, **caractérisé en ce que** la température de la première enceinte frigorifique et/ou de la deuxième enceinte frigorifique est comprise entre 0°C et 4°C.

10. Procédé selon l'une des revendications précédentes, **caractérisé en ce que** la première durée (t1) est d'au moins 5 jours, de préférence comprise entre 5 et 50 jours, de préférence encore comprise entre 5 et 20 jours.

11. Procédé selon l'une des revendications précédentes, **caractérisé en ce que** la deuxième durée (t2) est d'au moins 20 jours, de préférence comprise entre 20 jours et 20 semaines

## Patentansprüche

1. Reifeverfahren eines Stücks Fleisch, **dadurch gekennzeichnet, dass** es die folgenden Schritte umfasst, die darin bestehen:
- Platzieren des Stücks Fleisch in bloßem Zustand in einen ersten Kühlraum, in dessen Innern salzhaltige Luft während einer ersten Dauer t1 zirkuliert,
- nach Beendigung der ersten Dauer t1, Herausnehmen des Stücks Fleisch aus dem ersten Raum und Verpacken in eine Vakuumverpackung,
- dann Platzieren in einen zweiten Kühlraum während einer zweiten Dauer t2.

2. Verfahren nach Anspruch 1, **dadurch gekennzeichnet, dass** der erste Schritt darin besteht, das Stück Fleisch in bloßem Zustand in einen ersten Kühlraum, in dessen Innern Salzblöcke angeordnet sind und in dessen Innern während einer ersten Dauer t1 Luft zirkuliert, zu platzieren.

3. Verfahren nach Anspruch 1, **dadurch gekennzeichnet, dass** der erste Schritt darin besteht, Salzblöcke in einem Nebenraum zu platzieren, der sich von dem ersten Kühlraum unterscheidet, und dort Luft in Zirkulation zu versetzen, dann die derart salzhaltige Luft in den ersten Kühlraum zu schicken, der das Stück Fleisch in bloßem Zustand enthält.

4. Verfahren nach Anspruch 2 oder 3, **dadurch gekennzeichnet, dass** die Salzblöcke erwärmt werden.

5. Verfahren nach den Ansprüchen 2 und 4, **dadurch gekennzeichnet, dass** die Salzblöcke auf eine Temperatur von 8 bis 12 Grad über der Temperatur erwärmt werden, in der das Stück Fleisch im ersten Kühlraum gehalten wird.

6. Verfahren nach Anspruch 4 oder 5, **dadurch gekennzeichnet, dass** die Salzblöcke mit elektrischen Widerständen und/oder Halogenlampen erwärmt werden.

7. Verfahren nach einem der vorangehenden Ansprüche, **dadurch gekennzeichnet, dass** das Salz Steinsalz, vorzugsweise Himalayasalz, ist.

8. Verfahren nach einem der vorangehenden Ansprüche, **dadurch gekennzeichnet, dass** die Menge der Salzblöcke 8 bis 12 Kilogramm je Kubikmeter Raum beträgt.

9. Verfahren nach einem der vorangehenden Ansprüche, **dadurch gekennzeichnet, dass** die Temperatur des ersten Kühlraums und/oder des zweiten Kühlraums zwischen 0 °C und 4 °C inklusive beträgt.

10. Verfahren nach einem der vorangehenden Ansprüche, **dadurch gekennzeichnet, dass** die erste Dauer (t1) mindestens 5 Tage, vorzugsweise zwischen 5 und 50 Tagen inklusive, in noch bevorzugter Weise zwischen 5 und 20 Tagen inklusive, beträgt.

11. Verfahren nach einem der vorangehenden Ansprüche, **dadurch gekennzeichnet, dass** die zweite Dauer (t2) mindestens 20 Tage, vorzugsweise zwischen 20 Tagen und 20 Wochen, beträgt.

## Claims

1. A method for aging a piece of meat, **characterized in that** it comprises the following steps consisting in:
- placing said piece of meat in the uncovered state, in a first refrigerated enclosure inside which circulates salt-laden air, for a first period of time t1,
- at the conclusion of said first period of time t1, taking said piece of meat out of the first enclosure and wrapping it in vacuum packaging,
- then placing it in a second refrigerated enclosure, for a second period of time t2.

2. The method according to claim 1, **characterized in that** the first step consists in placing said piece of meat in the uncovered state, in a first refrigerated enclosure inside which are disposed salt blocks and inside which circulates air, for a first period of time t1.

3. The method according to claim 1, **characterized in that** the first step consists in placing salt blocks in an ancillary enclosure distinct from said first refrigerated enclosure and in causing air to circulate therein, then in sending the air thus laden with salt into said first refrigerated enclosure containing said piece of meat in the uncovered state.

4. The method according to claim 2 or 3, **characterized in that** the salt blocks are heated.

5. The method according to claims 2 and 4, **characterized in that** the salt blocks are heated to a temperature 8 to 12 degrees higher than the temperature at which the piece of meat is maintained in said first refrigerated enclosure.

6. The method according to claim 4 or 5, **characterized in that** the salt blocks are heated by electrical resistance and/or halogen lamps.

7. The method according to one of the preceding claims, **characterized in that** the salt is rock salt, preferably Himalayan salt.

8. The method according to one of the preceding claims, **characterized in that** the amount of salt blocks is from 8 to 12 kilograms per cubic meter of enclosure.

9. The method according to one of the preceding claims, **characterized in that** the temperature of the first refrigerated enclosure and/or of the second refrigerated enclosure is between 0°C and 4°C.

10. The method according to one of the preceding claims, **characterized in that** the first period of time (t1) is at least 5 days, preferably between 5 and 50 days, more preferably between 5 and 20 days.

11. The method according to one of the preceding claims, **characterized in that** the second period of time (t2) is at least 20 days, preferably between 20 days and 20 weeks.
